# EUROPEAN PATENT APPLICATION

(11) **EP 4 421 006 A1**
(43) Date of publication of application: **28.08.2024**
(21) Application number: 23158390.7
(22) Date of filing: 24.02.2023
(51) Int. Cl.: B65G 54/02, H02K 41/03

(54) **TRACK MODULE FOR A LINEAR MOTOR CONVEYING SYSTEM, LINEAR MOTOR CONVEYING SYSTEM AND METHOD FOR MANUFACTURING A TRACK MODULE**

(71) Applicant: Robert Bosch GmbH, 70442 Stuttgart (DE)
(72) Inventor: Spruit, Louis, 5502 CA Veldhoven (NL); Tielen, Niels, 4871 LM Etten-Leur (NL)

(57) **Abstract**

The invention relates to a track module (402) for a linear motor conveying system, wherein said track module comprises a track component and has a curved track geometry, wherein said track component (410) comprises at least two recesses (416.1, 416.2, 416.3, 417.1, 417.2, 417.3), wherein the track module further comprises at least two supporting structures (418), preferably, rods, each configured to act as one of at least two bearing surfaces for wheels, wherein each of the at least two supporting structures (418) is arranged in a respective one of the at least two recesses, and wherein the at least two supporting structures (418) are made of harder material than the track component (410). The invention also relates to a method for manufacturing a track module.

## Description

The present invention relates to a track module for a linear motor conveying system, to a linear motor conveying system, and to a method for manufacturing a track module. The linear motor conveying system comprises one or more track modules and one or more carriers to be guided in the one or more track modules.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high dynamics. The carriers themselves can be passive.

### Disclosure of the invention

According to the invention, a track module, a linear motor conveying system, and a method for manufacturing a track module with the features of the independent claims are proposed. Advantageous embodiments are subject-matter of dependent claims and of the following description.

The invention relates to linear motor conveying systems and the track modules used therein. Such a linear motor conveying system comprises one or more track modules and one or more carriers to be guided in the one or more track modules. The track modules can be standardized modules, several of such modules can be connected to each other to form a track system. A track module, for example, has or defines at least one conveying path, i.e., a path along which the carrier modules are to be guided and moved. Such track modules can be of different types, e.g., straight modules, curve modules, and switch modules. Such different modules in required numbers can be connected to form a track system according to specific needs. While a straight modules and curve modules typically have one conveying path, a switch module can have at least two conveying paths, or one conveying path split into two conveying paths.

The present invention particular relates to track modules having a curved track geometry, i.e., track modules in which at least part of the track to guide the carrier is curved and not straight. Such track modules are, in particular, curve modules and switch modules (switch modules can have straight and curved track parts, for example).

An embodiment of the invention relates to such a track module. The track module comprises a track component, and the track module has a curved track geometry as explained above. The track module further comprises at least two supporting structures, preferably, rods. Each of the supporting structures is configured to act as one of at least two bearing surfaces for wheels, preferably wheels of a carrier module. Each of the at least two supporting structures is arranged in a respective one of the at least two recesses of the track component. Further, the at least two supporting structures are made of harder material than the track component. In an embodiment, the track component is made of aluminum, preferably extruded aluminum. In an embodiment, the at least two supporting structures are made of steel, preferably, hardened steel.

In a linear motor conveying system, the multiple carrier modules move within a track module or several connected track modules, using wheels to support the carrier module, the weight of the payload and any attraction forces acting upon the carrier module. Within a linear motor conveying system, it is possible for a carrier module to move through a curve or make a switch. The wheels of the carrier module need to run on a surface (bearing surface) which is capable of handling large forces while also providing a long lifetime to the guidance system (the tracking modules). It has turned out that this can be achieved in that the surface on which the wheels make contact, are made from a hard material like a (hardened) steel or (hardened) stainless steel. However, making a complete track module from this material would be too expensive and difficult to manufacture. Thus, the track component can be made of other, less hard material, like aluminum. An aluminum base frame can thus be used with (hardened) stainless steel inlays (the supporting structures or rods) as running or bearing surfaces. The track component can also be formed in one piece. It is noted that the track component can have a structure with struts or the like, further reducing the weight and improving stability.

This allows having a light weight and easy to produce track component (base frame), but also having strong running surface for the carrier wheels which gives a long lifetime. Both advantages are allowed in curves and switches.

It is noted that track modules having a straight geometry (i.e., track modules of the straight module type) can also have such support structures in such recesses of a track component.

In an embodiment, the track component comprises, along at least part of a conveying path, a first side part, a second side part and a bottom part, wherein the first side part and the second side part are arranged opposite to each other. The bottom part preferably is configured to be placed on and/or to be oriented towards and/or to be mounted to a ground surface. Thus, the bottom part can be oriented essentially horizontally, and the first and second side parts can be oriented essentially vertically. The track component can be U-shaped, seen in cross section through the conveying path or a direction of the conveying path, for example (with the first and second side parts the legs of the U).

At least a first one of the at least two bearing surfaces is arranged at the first side part, and at least a second one of the at least two bearing surfaces is arranged at the second side part, such that the at least one first bearing surface and the at least one second bearing surface face each other. The track module can also comprise more than two bearing surfaces, for example, two or three first and two or three second bearing surfaces. This requires more than two support structures. The number of bearing surfaces typically should match with the number and/or arrangement of wheels of a carrier module.

Such track module with two side parts allows receiving a carrier module between the first side part and the second side part. Such carrier module can comprise at least two wheels. In an embodiment, the track module is configured such that the at least one first bearing surface matches with at least a first wheel of the carrier module, and that the at least one second bearing surface matches with at least a second wheel of the carrier module. If more bearing surfaces are provided at the track module, more corresponding wheels can be provided at the carrier module. With respect to the bearing surface and the wheels, matching means that a wheel can be guided by and roll on a respective bearing surface.

In an embodiment, the track module further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, the track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

In an embodiment, the first electro-magnetic motor component is fixed to the first side part by means of gluing and/or screwing, and/or the second electro-magnetic motor component is fixed to the second side part by means of gluing and/or screwing. This allows simple, fast and safe fixation.

In an embodiment, the bottom part comprises one or more holes facing the ground surface. This allows for cleaning out small piece of debris. Also, water is allowed to drain when used in an IP65 type of environment, for example.

Another embodiment of the invention relates to a linear motor conveying system, comprising one or more track modules as described above, and one or more carrier modules to be received and guided in the one or more track modules. The one or each of the more carrier modules is received or receivable in the one or each of the more track modules, wherein the one or each of the more carrier modules comprises a carrier component and at least two wheels. In order to connect several track modules to each other, appropriate connection means like screws or from fittings can be provided for mechanical connection. Also, electrical connection of the electro-magnetic motor components should be provided.

In an embodiment, the linear motor conveying system further comprises a controlling system for controlling the linear motor conveying system to move the one or each of the more carriers within the one or more track modules. This can comprise controlling (and powering) the electro-magnetic motor components, e.g., the coils, of the track modules in appropriate way.

Such carrier module can comprise a carrier component and at least two wheels. The carrier module can be configured to be received between a first side component and a second side component of a track module, like the track module described above. At least a first one of the two wheels and at least a second one of the two wheels are arranged at the carrier component opposite to each other, such that the at least one first wheel faces the first side component and the at least one second wheel faces the second side component, when received in the track module.

In an embodiment, the carrier module can further comprise two counterpart electro-magnetic motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module.

Another embodiment of the invention relates to a method for manufacturing a track module for a linear motor conveying system, preferably, the track module as described above. Said track module has a curved track geometry. The method comprises the following steps. A track component is provided, wherein said track component comprises at least two recesses and, preferably, has a curved geometry. At least two supporting structures, preferably, rods, are provided. Preferably, at least one of these is provided with curved geometry (i.e., the rod is bent). Each of these is intended to act as one of at least two bearing surfaces for wheels. The at least two supporting structures are made of harder material than the track component. For example, the at least two supporting structures are made of (hardened) steel or stainless steel, and the track component is made of aluminium. Each of the at least two supporting structures is arranged in a respective one of the at least two recesses.

The track components (which have the form of profiles) can be extruded from aluminum. The track component can be produced by heating an aluminum ingot and pushing the heated ingot through a special design die. This die should have the profile of the track component (base frame), in which the support structures (e.g., stainless steel inlays) can be arranged or placed. In order to create a proper interface for the support structures, the recesses (or cavities) in which the support structures are placed can be milled after the extrusion. The support structures can be pushed into the recesses and be clamped in place by the aluminum extrusion.

In an embodiment, the track component having the curved geometry is provided by manufacturing the track component to have a straight geometry, preferably, by means of extrusion. The track component is then bent to get the curved geometry. A desired form or radius for the curved geometry can be chosen, e.g., depending on whether a curve module or a switch module is manufactured.

In another embodiment, the track component having the curved geometry is provided by manufacturing the track component directly to have the curved geometry, preferably, by means of milling.

Both embodiments to obtain the curved geometry have specific advantages. The embodiment with bending the track component has easier and faster manufacturing of the track component. The embodiment with directly manufacturing the curved geometry can provided a more exact recess forming.

In another embodiment, the track component can be provided as a straight track component, and the at least two supporting structures can be provided as straight supporting structures. Each of the straight supporting structures can be arranged in the respective one of the at least two recesses of the straight track component. Afterwards, the track component and at least one of the at least two supporting structures are bent together.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system according to an embodiment in a perspective view;
- Fig. 2: shows a track module according to an embodiment in a perspective view;
- Fig. 3a: shows a track module and a carrier module according to an embodiment in a perspective view;
- Fig. 3b: shows the track module and the carrier module of Fig. 3a in a cross section;
- Fig. 3c: shows the carrier module of Fig. 3a in a perspective view;
- Fig. 4a: shows a track module in a stage of a manufacturing process according to an embodiment;
- Fig. 4b: shows the track module of Fig. 4a in another stage of the manufacturing process;
- Fig. 5: show a method for manufacturing a track module according to an embodiment;
- Fig. 6a: shows a track module according to an embodiment in a perspective view;
- Fig. 6b: shows the track module of Fig. 6a in another state; and
- Fig. 7: show a method for operating a linear motor conveying system according to an embodiment.

### Detailed description of the drawing

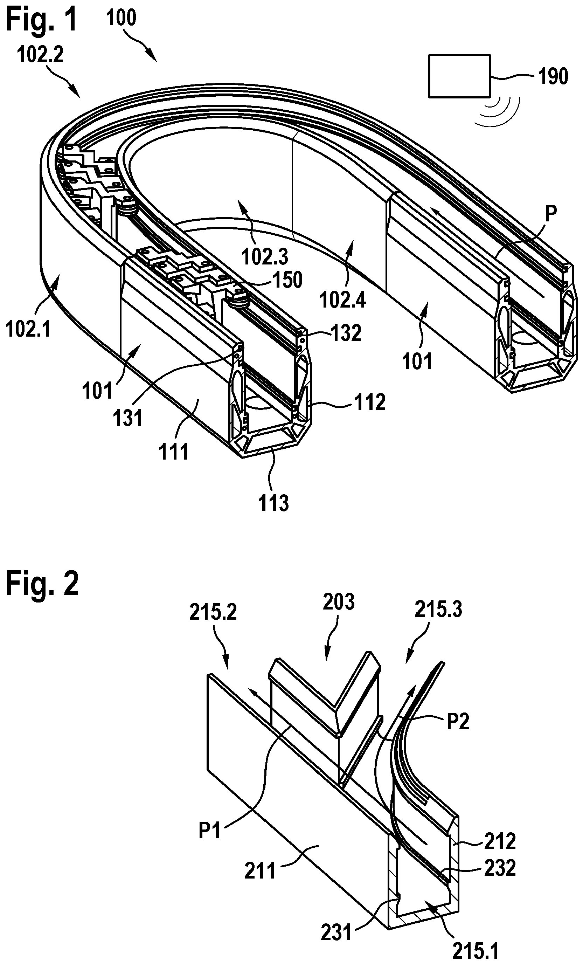

Fig. 1 schematically illustrates a linear motor conveying system 100 according to an embodiment in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four track modules 102.1, 102.2, 102.3, 102.4 are curve modules. The straight modules 101 are both identical, in the example shown in Fig. 1. It is noted, however, that straight modules can have a different length, where a length is to be seen in moving or conveying direction along a conveying path P, indicated for a straight module 101 in Fig. 1.

The curve modules 102.1, 102.2, 102.3, 102.4 are different from each other, in the example shown in Fig. 1. The curve modules 102.1, 102.2, 102.3, 102.4 have different radii and/or curve shapes, for example. It is noted, however, that these four different curve modules are only for illustration. According to needs, different curve modules having different radii and/or different shape can be provided. However, the curve modules have in common that they all provide curved tracks, in particular, only curved tracks.

The straight module 101 at the lower left side in Fig. 1 will be described in more detail. The track module 101 comprises a track component, and at least two bearing surfaces 131, 132. By means of example, six bearing surfaces are shown in Fig. 1, while only two of them are indicated with a reference numeral.

Further, the track component comprises a first side part 111, a second side part 112 and a bottom part 113, wherein the first side part 111 and the second side part 113 are arranged opposite to each other. By means of example, the track component, and also each of the first side part 111, the second side part 112 and the bottom part 113, are formed to have a structure with struts or ribs, rather than a full material structure. This allows using less material while still having a robust structure.

At least a first one of the at least two bearing surfaces (here, e.g., bearing surface 131) is arranged at or formed integrally with the first side part 111, and at least a second one of the at least two bearing surfaces (here, e.g., bearing surface 132) is arranged at or formed integrally with the second side part 112, such that the at least one first bearing surface 131 and the at least one second bearing surface 132 face each other.

By means of example, the bearing surfaces are formed by support structures like rods, arranged in or inserted into recesses in the first side part 111 and the second side part 112. In general, however, such bearing surface can also be formed by the first side part 111 and the second side part 112, e.g., by having specific shapes.

It is noted that this way of how a track module is formed, does not only apply to straight module 101 but also to other types of modules like the curve modules 102.1, 102.2, 102.3, 102.4.

Each of the straight modules and the curve modules shown in Fig. 1, have a conveying path, although only shown for one straight module 101, from a respective first to a respective second end. When the track modules are connected to each other, the individual tracking paths are also connected to form a cumulated conveying path, along which the carrier modules are guided and conveyed. Note that carrier modules can be moved or conveyed in both directions of a conveying path, receptive of the direction of the arrow indicating the conveying path P.

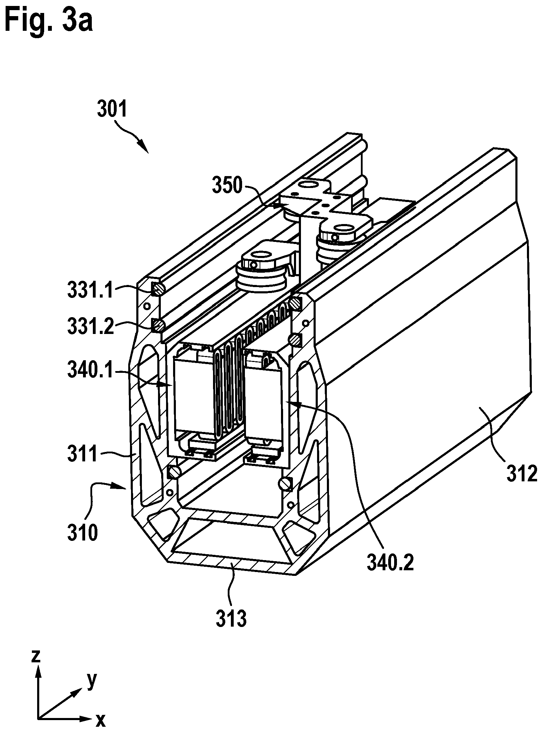

Further, the linear motor conveying system 100 comprises, by means of example, several carrier modules 150 (six carrier modules are shown in Fig.1, while only one of them is indicated with a reference numeral). The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Fig. 1 but will be illustrated and described in more detail later with respect to Figs. 3a to 3c.

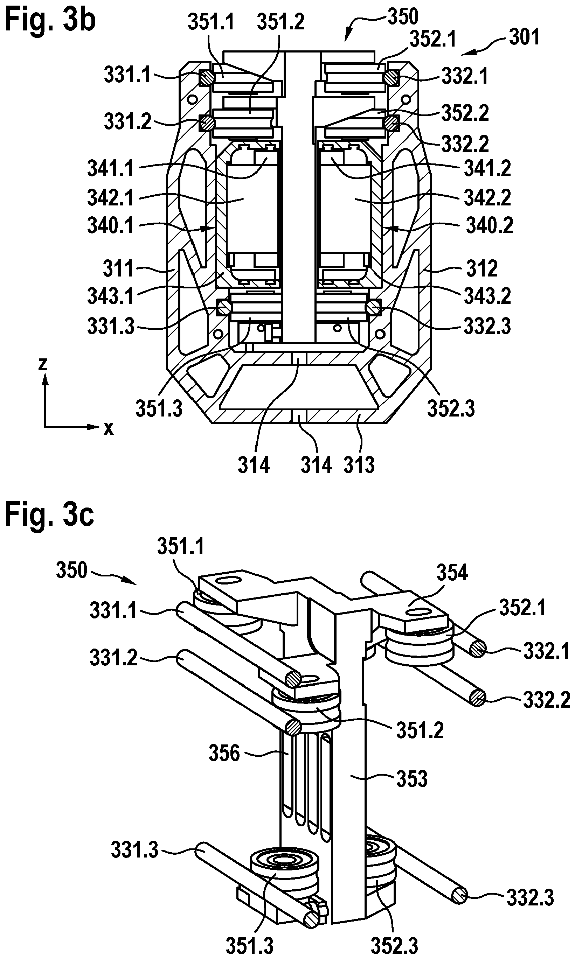

Further, the linear motor conveying system 100 comprises, in an embodiment, a controlling system 190 for controlling the linear motor conveying system 100 to move the carrier modules 150 within the track modules 101, 102.1, 102.2, 102.3, 102.4, i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled. Such electro-magnetic motor components are not shown in Fig. 1 but will be shown in Figs. 3a, 3b.

Fig. 2 schematically illustrates a track module 203 according to an embodiment in a perspective view. Track module 203 is a switch module, i.e., a track module of the switch type. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, in order to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module with leave the switch module 203 at the first end 215.3. In other words, both conveying paths P1, P2 are merged.

Similar to the straight modules and curve modules shown in Fig.1, the switch module 203 comprises a track component for a conveying path, e.g., P1. The switch module 203 further comprises at least two bearing surfaces 231, 232. By means of example, six bearing surfaces are shown in Fig. 2, while only two of them are indicated with a reference numeral.

Further, the track component comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

By means of example, the track component, and also each of the first side part 211, the second side part 212 and the bottom part 113, are formed to have a full material structure, different to the track modules shown in Fig. 1. Depending on the way how the bearing surfaces are formed, e.g., their inclination, wheels of the carrier modules might have to have a corresponding inclination or arrangement.

At least a first one of the at least two bearing surfaces (here, e.g., bearing surface 231) is arranged at or formed integrally with the first side part 211, and at least a second one of the at least two bearing surfaces (here, e.g., bearing surface 232) is arranged at or formed integrally with the second side part 212, such that the at least one first bearing surface 231 and the at least one second bearing surface 232 face each other.

By means of example, and different to the bearing surfaces shown in Fig. 1, the bearing surfaces are formed by the first side part 211 and the second side part 212, by having specific shapes or geometry. Such switch module, however, could also comprise earing surfaces formed like for the track modules shown in Fig. 1. Also, such switch module could comprise a track component formed like for the track modules shown in Fig. 1, i.e. with struts or rib structure.

Switch modules like the one shown in Fig. 2, can be used together with straight modules and curve modules like the one shown in Fig. 1, in order to create a (complex) track system and linear motor conveying system. It should be considered, that the bearing surfaces of the different track modules should be of the same type

Fig. 3a illustrates a track module 301 and a carrier module 350 according to an embodiment in a perspective view. Fig. 3 b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3a, 3b, 3c shall be described together in the following.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces 331.1, 331.2, 331.3, 332.1, 332.2, 332.3. Further, the track component 301 comprises, along a conveying path, a first side part 311, a second side part 312 and a bottom part 313, wherein the first side part 311 and the second side part 312 are arranged opposite to each other. The conveying path is not denoted in Fig. 3, but extends along the y-direction and can be similar or equal to conveying path P shown in Fig. 1.

By means of example, the track component 310, and also each of the first side part 311, the second side part 312 and the bottom part 313, are formed to have a structure with struts or ribs, rather than a full material structure. This allows using less material while still having a robust structure. For example, the bottom part 313 and parts of each of the first side part 311 and the second side part 312 have a double wall structure with supporting ribs between the two walls.

Three first bearing surfaces (here, e.g., bearing surfaces 331.1, 331.2, 331.3) are arranged at or formed integrally with the first side part 311, and three second bearing surfaces (here, e.g., bearing surfaces 332.1, 332.2, 332.3) are arranged at or formed integrally with the second side part 312, such that the at first bearing surfaces 331.1, 331.2, 331.3 and the second bearing surfaces 332.1, 332.2, 332.3 face each other, i.e., are oriented towards each other. In other words, all of the bearing surfaces are provided at an inner side of the respective first and second side parts, where the conveying path is formed.

By means of example, the bearing surfaces are formed by support structures like rods, arranged in or inserted into recesses in the first side part 311 and the second side part 312. In general, however, such bearing surface can also be formed by the first side part 311 and the second side part 312, e.g., by having specific shapes.

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1; a number of the electric coils can depend on the way how the coils are manufactured. Further, the first electro-magnetic motor component 340.1 can comprise one or more magnetic or ferromagnetic cores or a structured magnetic core 342.1, e.g., made of iron. Such magnetic or ferromagnetic core increases the magnetic forces produced by the electric coils. Further, the first electro-magnetic motor component 340.1 can comprise a holding or fixing structure 343.1 for fixing the coils and magnetic core to the first side part 311. The first electro-magnetic motor component 340.1 can be fixed to the first side part 311 by means of gluing and/or screwing, for example.

Similarly, the second electro-magnetic motor component 340.2 comprises one or more electric coils 341.2; a number of the electric coils can depend on the way how the coils are manufactured. Further, the second electro-magnetic motor component 340.2 can comprise one or more magnetic or ferromagnetic cores or a structured magnetic core 342.2, e.g., made of iron. Such magnetic or ferromagnetic core increases the magnetic forces produced by the electric coils. Further, the second electro-magnetic motor component 340.2 can comprise a holding or fixing structure 343.2 for fixing the coils and magnetic core to the second side part 312. The second electro-magnetic motor component 340.2 can be fixed to the second side part 312 by means of gluing and/or screwing, for example.

In an embodiment, the bottom part 313 is configured to be placed on and/or to be oriented towards and/or to be mounted to a ground surface. Such ground surface would be below the bottom part 313, seen in z-direction in Figs. 3a, 3b. In an embodiment, the bottom part 313 comprises one or more holes 314 facing the ground surface. This allows for cleaning out small piece of debris. Also, any fluid, e.g., water, is allowed to drain when used in an IP65 type of environment, for example.

The track module 301 is configured to receive a carrier module 350 between the first side part 311 and the second side part 312 and is, preferably, configured such that the first bearing surfaces 332.1, 332.2, 332.3 match with respective first wheels of the carrier module 350, and that the second bearing surfaces 332.1, 332.2, 332.3 match with respective second wheels of the carrier module 350.

While Figs. 3a, 3b shown the carrier module 350 being received in the track module 301, Fig. 3c shows the carrier module 350 as such. In addition, Fig. 3c shows the six bearing surfaces 331.1, 331.2, 331.3, 332.1, 332.2, 332.3 (these are rods, in this example). The carrier module 350 comprises a carrier component 353 and, by means of example, six wheels, three first wheels 351.1, 351.2, 351.3, and three second wheels 352.1, 352.2, 352.3 (note that wheel 352.2 is not visible in Fig. 3c). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six bearing surfaces 331.1, 331.2, 331.3, 332.1, 332.2, 332.3. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to form a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to form a linear electro-magnetic motor. This also, typically, requires an air gap of appropriate size between these two components. Thus, the track module 301 allows receiving a state of levitation of the carrier module 350 between the two side parts of the track module 301; this reduces cogging.

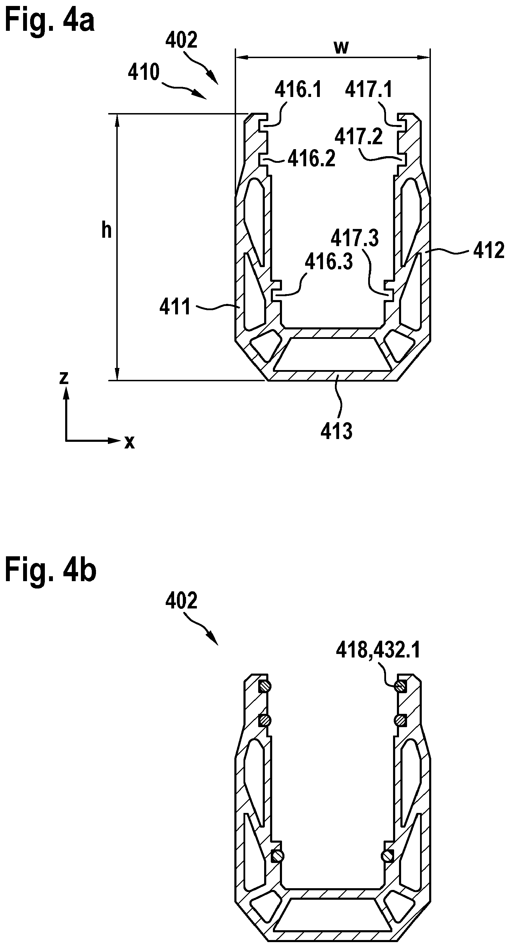

Fig. 4a schematically illustrates a track module 402 in a stage of a manufacturing process according to an embodiment. Fig. 4b schematically illustrates the track module 402 of Fig. 4a in another stage of the manufacturing process. Track module 402 comprises a track component 410 and has a curved track geometry. For example, track module 402 can be or can correspond to a curve module like any one of curve modules 102.1, 102.2, 102.3, 102.4 shown in Fig. 1. As mentioned with respect to Figs. 1, 3a, 3b, the structure of a curve module can, in general, be the same as for a straight module, besides the curved instead of straight geometry. Thus, the track module 402 has similar or the same parts or components as a straight module.

The track component 410 comprises a first side part 411, a second side part 412 and a bottom part 413, wherein the first side part 411 and the second side part 412 are arranged opposite to each other. By means of example, the track component 410, and also each of the first side part 411, the second side part 412 and the bottom part 413, are formed to have a structure with struts or ribs, rather than a full material structure. This allows using less material while still having a robust structure. The track component 410 can have, for example, a height h (here in z-direction) and a width w (here in x-direction).

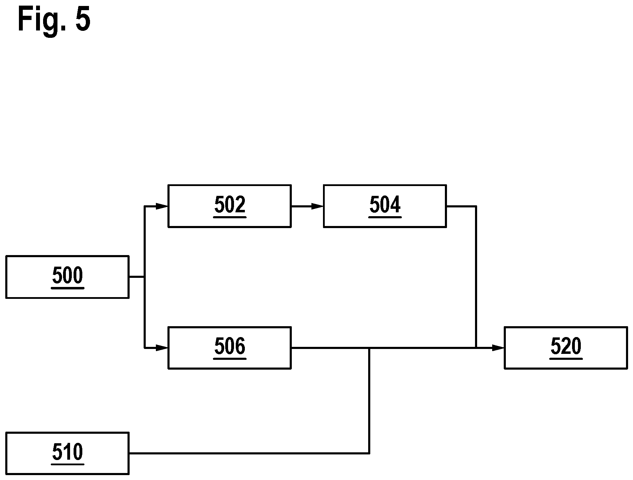

Fig. 5 schematically illustrates a method for manufacturing a track module like track module 401, according to an embodiment, in a flow diagram. Figs. 4, 4a and 5 will be described together in the following.

In a step 500, the track component 410 is provided. The track component 410 has a curved geometry and comprises, by means of example, six recesses 416.1, 416.2, 416.3, 417.1, 417.2, 417.3. Three first recesses 416.1, 416.2, 416.3 are provided at the first side part 411, and three recesses 417.1, 417.2, 417.3 are provided at the second side part 412. The track component 410 can be made of aluminium.

In a step 510, by means of example, six supporting structures, preferably, rods, are provided. In Fig. 4b six rods 418 are shown in the recesses, whereas only one of these rods is indicated with a reference numeral. Note that these supporting structures or rods 418 can correspond to the ones shown in Figs. 1, 3a, 3b, 3c and where these are described to form the bearing surfaces. Similarly, each of the rods 418 is intended to act as a bearing surface for a wheel. One or more or all of the supporting structures or rods 418 have a curved geometry, just like it is intended to have in the final curve module, like shown in Fig. 1. The supporting structures can be made of (hardened) steel or (hardened) stainless steel. In general, the supporting structures should be made of harder material than the track component.

In an embodiment, providing the track component 410 having the curved geometry comprises, in a step 502, manufacturing the track component 410 to have a straight geometry, preferably, by means of extrusion. This can be similar to the geometry of the track component 310 shown in Fig. 3a. For example, the track component 410 (which has the form of a profile) can be extruded from aluminum. The track component 410 can be produced by heating an aluminum ingot and pushing the heated ingot through a special design die. This die should have the profile of the track component 410, in which support structures (e.g., stainless steel inlays) can be arranged or placed. These are the recesses shown in Fig. 4a. In order to create a proper interface for the support structures, the recesses (or cavities) in which the support structures are to placed can be milled after the extrusion.

In a step 504, the track component (having a straight geometry) is bent in order to obtain the track component having the curved geometry. An appropriate tool or machine for bending can be used, for example. A desired form or radius for the curved geometry can be chosen, e.g., depending on whether a curve module or which curve module is manufactured. As can be seen in Fig. 1, different curve modules can be provided.

In another embodiment, in step 506, the track component 410 is manufactured directly to have the curved geometry, preferably, by means of milling. An appropriate tool or machine for machining or milling can be used, for example. Again, a desired form or radius for the curved geometry can be chosen, e.g., depending on whether a curve module or which curve module is manufactured. As can be seen in Fig. 1, different curve modules can be provided.

In a step 520, each of the supporting structures 418 is arranged in a respective one of the recesses. The support structures can be pushed into the recesses and be clamped in place by the aluminum extrusion.

The resulting track module 401 comprises the track component 410, which comprises the recesses. Further, track module 401 comprises the supporting structures, preferably, rods, each configured to act as one of at least two bearing surfaces for wheels, and each of the supporting structures being arranged in a respective one recesses, as can be seen in Fig. 4b. The supporting structures are made of harder material than the track component 410. Further, the track module 401 can comprise electro-magnetic motor components as has been described above with respect to track module 301, for example; this is also applicable to a curved module.

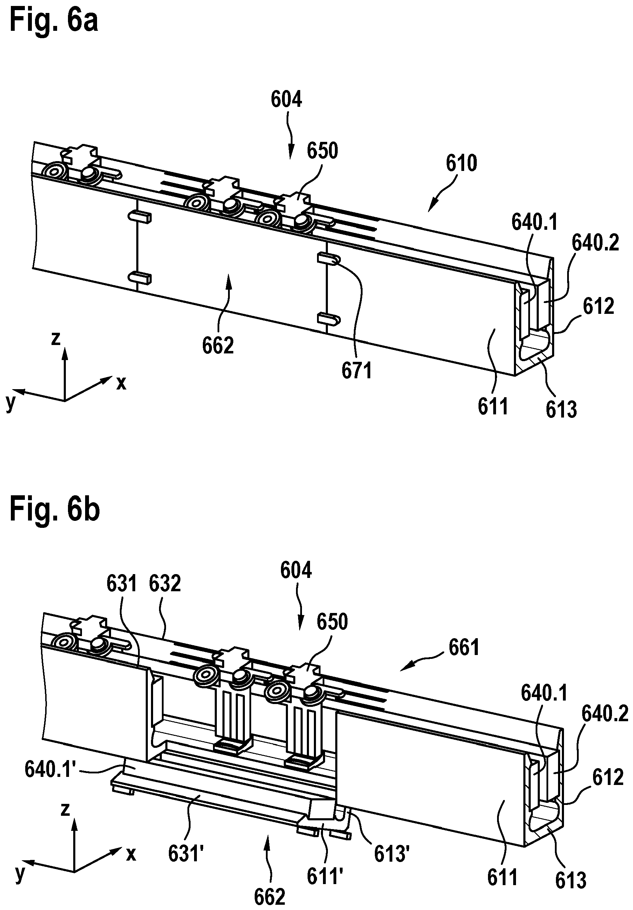

Fig. 6a schematically illustrates a track module 604 according to an embodiment in a perspective view. Fig. 6b illustrates the track module of Fig. 6a in another state. Figs. 6a, 6b will be described together in the following. As mentioned above, different types of track modules like straight modules, curve modules, and switch modules can be provided. Track module 604 is a further type of track module.

The track module 604 comprises a track component 610, and at least two bearing surfaces; by means of example, two bearing surfaces, a first bearing surface 631 and a second bearing surface 632 are shown. The basic structure or form of track module 604 can be similar to a straight module like track module 101 of Fig. 1 or track module 301 of Figs. 3a, 3b. Other than these track modules 101, 301, however, the tack component 610 is not of a strut or rib structured but made of full material, similar to the switch module 203 shown in Fig. 2. Correspondingly, the bearing surfaces are similar to those of the switch module 203 shown in Fig. 2. The arrangement of wheels of the carrier modules like carrier module 650 might be inclined. It is noted, however, that the structure of the track component and of the bearing surfaces could also be like the one of track module 101 of Fig. 1 or track module 301 of Figs. 3a, 3b, i.e., of strut of rib structure.

The track component 610 comprises a first side part 611, a second side part 612 and a bottom part 613. By means of example, the first bearing surface 631 is arranged at or formed integrally with the first side part 611, and the second bearing surface 632 is arranged at or formed integrally with the second side part 612. In an embodiment, the track module 610 further comprises two electro-magnetic motor components, a first electro-magnetic motor component 640.1 and a second electro-magnetic motor component 640.2. The first electro-magnetic motor component 640.1 and the second electro-magnetic motor component 640.2 extend along the conveying path (here: in y-direction). The first electro-magnetic motor component 640.1 is arranged at the first side part 611, and the second electro-magnetic motor component 640.2 is arranged at the second side part 612, such that the first electro-magnetic motor component 640.1 and the second electro-magnetic motor 640.2 component can face each other.

A structure of the first and second electro-magnetic motor components can be similar to the one shown in and described with respect to the track module 301 in Figs. 3a, 3b. For example, each electro-magnetic motor component can comprise one or more electric coils.

Further, the track module 610 comprises a static module part 661 and a movable module part 612. The movable module part 662 comprises at least a part 611' of the first side part 611 and at least a part 631' of the first bearing surface 631. In an embodiment, the movable module part comprises 661 at least part 640.1' of the first electro-magnetic motor component 640.1.

The movable module part 661 is movable with respect to the static module part 662 between a closed state and an opened state. The closed state is shown in Fig. 6a, and the opened state is shown in Fig. 6b. When in the closed state, the first side part 611 and the second side part 612 are arranged opposite to each other, such that the first bearing surface 631 and the second bearing surface 632 face each other, in particular, along the entire length of the conveying path or track module 604. In this closed state, the track module 604 behaves like a straight module like the track module 101 of Fig. 1 or track module 301 of Figs. 3a, 3b.

When in the opened state, however, the part 611' of the first side part 611, the part 631' of the first bearing surface 631, and also the part 640.1' of the first electro-magnetic motor component 640.1. are moved away so as to allow free access to the inner side of the track module in order to insert and/or remove carrier modules 650.

In an embodiment, the movable module part 661 is hingedly connected to the static module part 662, e.g., via a hinge mechanism 670. In an embodiment, the movable module part 661 further comprises a part 613' of the bottom part 613, for allowing better access. In an embodiment, the movable module part 661 is hingeable downwards, for moving it from the closed into the open state. As shown in Fig. 6b, the movable module part 661 is hinged (or flapped) downwards.

In an embodiment, the track module 604 further comprises a locking mechanism 671, configured to lock or fix the movable module part 662 with respect to the static module part 661, when in the closed state.

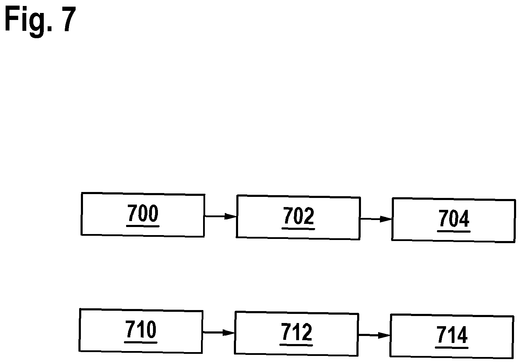

Fig. 7 schematically illustrates a method for operating a linear motor conveying system according to an embodiment, in a flow diagram. Such linear motor conveying system can comprise several tracking modules like the linear motor conveying system 100 of Fig. 1. Further, such linear motor conveying system comprise at least one tracking module with movable module part, like tracking module 604 of Figs. 6a, 6b.

For inserting a carrier module into the track modules, the following steps can be performed. In a step 700, the movable module part is moved with respect to the static part into the opened state, if not yet in opened state; this can be like from the situation shown in Fig. 6a into the situation shown in Fig. 6b. In a step 702, the carrier module is inserted into the track module, and in step 704, the movable module part is moved with respect to the static part into the closed state again. Then, usual operation is possible.

For removing a carrier module from the track modules, the following steps can be performed. In a step 710, the movable module part is moved with respect to the static part into the opened state, if not yet in opened state; this can be like from the situation shown in Fig. 6a into the situation shown in Fig. 6b. In a step 712, the carrier module is removed from the track module, and in optional step 714, the movable module part is moved with respect to the static part into the closed state. This step is required when other carrier modules still shall be moved in the linear motor conveying system.

## Claims

1. A track module (102.1, 102.2, 102.3, 102.4, 402) for a linear motor conveying system, wherein said track module comprises a track component and has a curved track geometry,
wherein said track component (410) comprises at least two recesses (416.1, 416.2, 416.3, 417.1, 417.2, 417.3),
wherein the track module further comprises at least two supporting structures (418), preferably, rods, each configured to act as one of at least two bearing surfaces (131, 132) for wheels,
wherein each of the at least two supporting structures (418) is arranged in a respective one of the at least two recesses, and
wherein the at least two supporting structures (418) are made of harder material than the track component (410).

2. The track module (102.1, 102.2, 102.3, 102.4, 402) of claim 1, wherein the track component (410) is made of aluminum, preferably extruded aluminum.

3. The track module (102.1, 102.2, 102.3, 102.4, 402) of claim 1 or 2, wherein the at least two supporting structures (418) are made of steel, preferably, hardened steel.

4. The track module (102.1, 102.2, 102.3, 102.4, 402) of any one of the preceding claims, wherein the track component (410) is formed in one piece.

5. The track module (102.1, 102.2, 102.3, 102.4, 402) any one of the preceding claims, wherein the track component (410) comprises, along at least part of a conveying path (P, P1, P2), a first side part (411), a second side part (412) and a bottom part (413), wherein the first side part and the second side part are arranged opposite to each other,
wherein at least a first one of the at least two bearing surfaces is arranged at the first side part, and at least a second one of the at least two bearing surfaces is arranged the second side part, such that the at least one first bearing surface and the at least one second bearing surface face each other.

6. The track module (102.1, 102.2, 102.3, 102.4, 402) of claim 5, configured to receive a carrier module (150, 350, 650) between the first side part and the second side part, such that the at least one first bearing surface matches with at least a first wheel of the carrier module, and that the at least one second bearing surface matches with at least a second wheel of the carrier module.

7. The track module (102.1, 102.2, 102.3, 102.4, 402) of claim 6, further comprising two electro-magnetic motor components, preferably two electric coils,
wherein a first one of the two electro-magnetic motor components is arranged at the first side part, and a second one of the two electro-magnetic motor components is arranged at the second side part, such that the first electro-magnetic motor component and the second electro-magnetic motor component face each other.

8. The track module (102.1, 102.2, 102.3, 102.4, 402) of claim 7, configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

9. The track module (102.1, 102.2, 102.3, 102.4, 402) of any one of the preceding claims, wherein the bottom part is configured to be placed on and/or to be oriented towards and/or to be mounted to a ground surface.

10. The track module (102.1, 102.2, 102.3, 102.4, 402) of any one of the preceding claims, being configured as one of the following track module types: a curve module, a switch module.

11. A linear motor conveying system (100), comprising one or more track modules (102.1, 102.2, 102.3, 102.4, 402) of any one of the preceding claims, and one or more carrier modules (150, 350, 650) to be guided in the one or more track modules,
wherein the one or each of the more carrier modules (150, 350, 650) is received or receivable in the one or each of the more track modules, wherein the one or each of the more carrier modules comprises a carrier component and at least two wheels.

12. The linear motor conveying system (100) of claim 11, further comprising a controlling system (190) for controlling the linear motor conveying system to move the one or each of the more carriers within the one or more track modules.

13. A method for manufacturing a track module (102.1, 102.2, 102.3, 102.4, 402) for a linear motor conveying system (100), preferably, the track module of any one of claims 1 to 10, wherein said track module (102.1, 102.2, 102.3, 102.4, 402) has a curved track geometry, comprising the following steps:
- Providing (500) a track component (410), wherein said track component comprises at least two recesses (416.1, 416.2, 416.3, 417.1, 417.2, 417.3),
- Providing (510) at least two supporting structures (418), preferably, rods, each intended to act as one of at least two bearing surfaces for wheels, wherein the at least two supporting structures (418) are made of harder material than the track component (410), and
- Arranging (520) each of the at least two supporting structures in a respective one of the at least two recesses.

14. The method of claim 13, wherein, in Providing (500) the track component (410), said track component (410) has a curved geometry, and wherein, in Providing (510) the at least two supporting structures (418), at least one of the at least two supporting structures has a curved geometry.

15. The method of claim 14, wherein Providing the track component (410) having the curved geometry comprises:
- Manufacturing (502) the track component to have a straight geometry, preferably, by means of extrusion, and
- Bending (504) the track component to obtain the track component having the curved geometry.

16. The method of claim 14, wherein Providing the track component having a curved geometry comprises:
- Manufacturing (506) the track component directly to have a curved geometry, preferably, by means of milling.
